# EUROPEAN PATENT APPLICATION

(11) **EP 1 486 699 A1**
(43) Date of publication of application: **15.12.2004**
(21) Application number: 03425383.1
(22) Date of filing: 12.06.2003
(51) Int. Cl.: F16G 13/06

(54) **Chain link for a bicycle and related chain**

(71) Applicant: Campagnolo S.r.l., 36100 Vicenza (VI) (IT)
(72) Inventor: Valle, Maurizio, 36100 Vicenza (IT)
(74) Representative: Riccardi, Elisa

(57) **Abstract**

A chain link (1; 30) for a bicycle formed of a flat elongated body (2), at the ends (3, 4) of which there are a first (5; 35) and a second (6; 36) through-hole for inserting pins (7) that are necessary for coupling the link (1; 30) with the other links (30; 1) of the chain (50). In the region (11) between the first (5; 35) and the second (6; 36) coupling hole there are two through-openings (12, 13; 42, 43) obtained by removal of material.

## Description

The present invention refers to a chain link for a bicycle which is particularly light and strong and to the related chain.

It is known that in a bicycle, the chain is used to transmit power from the toothed crowns to the sprockets; the power on the toothed crowns being imposed by the rider through the pedals and the power from the sprockets being transmitted to the rear wheel of the bicycle. It is also known that the bicycle chain is formed of a series of pairs of links (inner and outer) connected together in an articulated manner through pins, and that about the pins rollers are mounted which insert inside the valleys in the toothed crowns and sprockets and transmit power.

It is also known that the conditions of use of a bicycle can be very different and, especially in the field of racing bicycles, can be very extreme.

The chain, and the links of which it is composed, must, therefore, be particularly strong.

The chain, at the same time, must ensure easy displacement thereof between one toothed crown and another and between one sprocket and another, to allow the various gearshift ratios to be accomplished with quick and reliable gear-shiftings.

The chain links, after all, must be very strong but, at the same time, must also have a "slender" shape to ensure ease and reliability of gear-shifting.

To ensure these goals the chain, and its links, are made of steel alloys and are, therefore, quite heavy.

The constant effort to decrease the weight of the bicycle, above all in the field of racing bicycles, also involves the chain.

However, unlike other bicycle components, at the moment, materials lighter than steel alloy which can ensure adequate strength of the chain are not foreseen.

Therefore, the aim of reducing the weight of the chain must take place without changing the material of which it is made.

From patent US 5,322,483 a chain is known having circular openings at the centre of the links. Such openings have the purpose of helping the lubrication of the chain and are obtained by drawing. That is, the openings are formed by bending the central portion of the chain link inwards without removing material. Therefore, the weight of the chain is not reduced with respect to chains without openings. Moreover, the central circular openings weaken the chain links.

The object of the present invention is to create chain links and the corresponding chain with reduced weight, still without reducing the strength of the links and of the chain.

A first aspect of the invention consists in a chain link for a bicycle formed of a flat elongated body, at the ends of which there are a first and second through-hole for inserting pins that are necessary for coupling the link with the other chain links, characterised in that it has, in the region between said first and said second coupling hole, at least one through-opening formed by removal of material.

Advantageously, the through-opening made by removal of material reduces the weight of the link and of the corresponding chain.

Preferably, such a through-opening is made in a link region where the stresses are minimal and this involves a reduction in weight without weakening the link and the related chain.

Even more preferably, in the chain link two through-openings are made by removal of material and this further reduces the weight of the link and of the corresponding chain.

Another aspect of the invention consists in a bicycle chain consisting of a series of chain links formed of a flat elongated body, at the ends of which there are a first and second through-hole for inserting pins that are necessary for coupling of the links with the other chain links, characterised in that at least one of said links has, in the region between said first and said second coupling hole, at least one through-opening formed by removal of material.

Further characteristics and advantages of the invention shall become clearer from the description of a preferred embodiment, made with reference to the attached drawings, wherein:
- fig. 1 represents a plan view of an outer chain link according to the invention;
- fig. 2 represents a plan view of an inner chain link according to the invention;
- fig. 3 represents an exploded isometric view of a length of chain according to the invention.

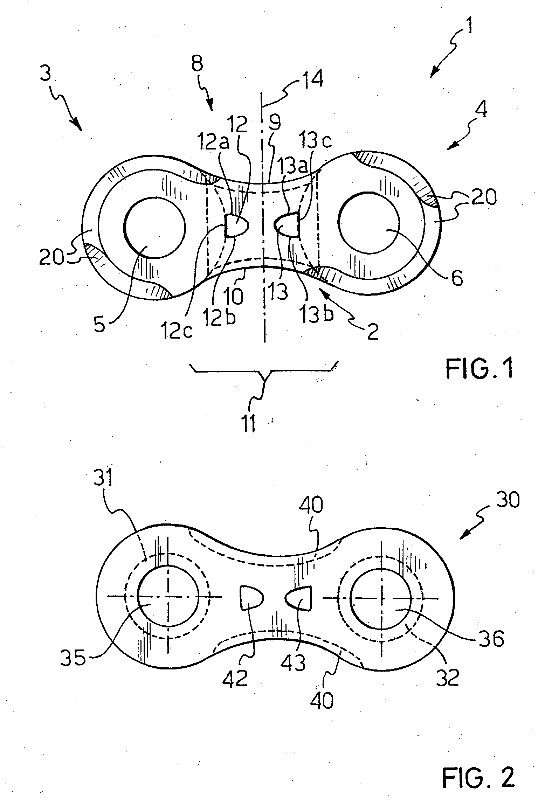

In fig. 1, an outer chain link is globally indicated with 1.

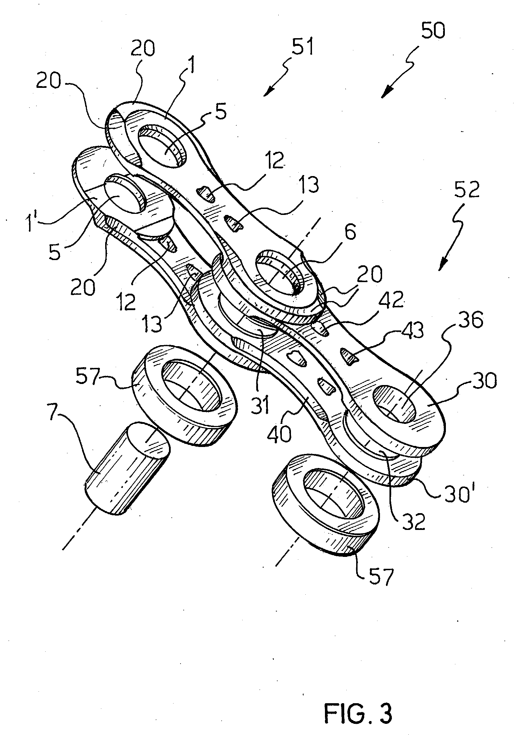

It consists of an elongated flat body 2 the ends 3 and 4 of which are substantially circular and have a first through-hole 5 and a second through-hole 6, also circular. Such through-holes 5 and 6 allow the insertion of pins 7, as can be seen in fig. 3, used during the assembly of the chain 50 to couple the outer link 1 with another outer link 1' and with two inner links 30 and 30'.

The rounded ends 3 and 4 are joined together by a central portion 8, the profiles 9 and 10 of which substantially consist of an arc of a circumference which radius is determined, in the design step, so as to provide the central part 8 and the entire link 1 with the necessary strength.

The link 1 of the invention has, in the region 11 between the two holes 5 and 6, two through-openings 12 and 13 formed by removal of material. By removal of material it is meant any technological process allowing through-openings 12 and 13 to be obtained which brings about a reduction in weight of the link with respect to the situation where it is solid. Such removal can, for example, be carried out through punching, by chip machining or with laser technology.

The through-openings 12 and 13 are respectively made in a region 11 between the centre of the link 14 and one of the coupling holes 5 or 6. The size of the through-openings 12 and 13 increase going from the centre towards the respective coupling hole 5 or 6. In particular, the increase in size is accomplished by having the profiles 12a, 13a e 12b, 13b of the openings 12 and 13 substantially follow the profiles 9 and 10 of the central portion 8 of the link 1, thus according to an arc of a circumference. Each through-opening 12 and 13 has the profile 12c and 13c facing towards the through-hole 5 or 6 with a concave shape of an arc of circumference shape. In a different embodiment such a shape could be convex circular.

The joining lengths 12a, 12b, 12c and 13a, 13b, 13c of the through-openings 12 and 13 are rounded to avoid sharp corners and thus weak zones subject to breaking.

More specifically, the through-openings 12 and 13 are arranged so that they start by leaving a predetermined full amount, from the centre of the link 1, and end at the circles of the rounded end portions 3 and 4. Such a position ensures that the openings 12 and 13 are made in the regions of the link 1 subject to the minimum stresses. Moreover, their shape, increasing from the centre towards the ends, allows the maximum removal of material of the openings 12 and 13, keeping the strong section of the central portion 8 of the link 1 substantially constant without, therefore, substantially decreasing its strength.

The openings 12 and 13 are symmetrical with respect to the centre 14 of the link 1. It is clear, however, that in different embodiments the shape, the size and the positioning of the openings could be different. They could, for example, have a circular or elliptical shape. Moreover, the two openings could have different shapes to each other and/or be asymmetrical.

Finally, the outer link of fig. 1 has a plurality of bevels 20, better highlighted in fig. 3, located both on the outer face of the link 1 and on the inner face which, according to the prior art, ease the engagement of the chain 50 during its operation.

In Fig. 2 an inner link 30 is shown, having openings 42 and 43 according to the invention and as described for the outer link 1. The inner link 30 differs from the outer link 1 in that it has collars 31 and 32, coaxial with the coupling through-holes 35 and 36 and in that it has bevels 40 only on its inner face.

In Fig. 3 a length of chain 50 is shown, in which a pair 51 of outer links 1 and 1' and a pair 52 of inner links 30 and 30' can be seen in the assembly configuration. In particular, it is possible to see the pin 7, necessary for the assembly of the chain, and the rollers 57 kept in axis with the pins 7 by the collars 31 and 32 present in the inner links.

## Claims

1. Chain link (1; 30) for a bicycle formed of a flat elongated body (2), at the ends (3, 4) of which there are a first (5; 35) and a second (6; 36) through-hole for inserting pins (7) that are necessary for the coupling of the link (1; 30) with the other links (30; 1) of the chain (50), **characterised in that** it has, in the region (11) between said first (5; 35) and said second (6; 36) coupling hole, at least one through-opening (12, 13; 42, 43) obtained by removal of material.

2. Chain link (1; 30) according to claim 1, **characterised in that** said through-opening (12, 13; 42, 43) is made in a region of minimum stress of the link (1; 30).

3. Chain link (1; 30) according to claim 1, **characterised in that** said through-opening (12, 13; 42, 43) is made in a region between the centre (14) of the link (1; 30) and one of said coupling holes (5, 6; 35, 36).

4. Chain link (1; 30) according to claim 3, **characterised in that** the size of said through-opening (12, 13; 42, 43) increases from the centre (14) of the link (1; 30) towards said coupling hole (5, 6; 35, 36).

5. Chain link (1; 30) according to claim 1, **characterised in that** the profiles (12a, 12b; 13a, 13b) of said through-opening (12, 13; 42, 43) along the link (1; 30) substantially follow the outer profiles (9, 10) of said link (1; 30).

6. Chain link (1; 30) according to claim 1, **characterised in that** the profile (12c, 13c) of said through-opening (12, 13; 42, 43) in the proximity of said coupling hole (5, 6; 35, 36) is concave and substantially follows an arc of a circumference.

7. Chain link (1; 30) according to claim 1, **characterised in that** the profile of said through-opening in the proximity of said coupling hole is convex and substantially follows an arc of a circumference.

8. Chain link (1; 30) according to claim 4, **characterised in that** said through-opening (12, 13; 42, 43) has rounded corners.

9. Chain link (1; 30) according to claim 3, **characterised in that** it comprises, in a region between the centre (14) of the link (1; 30) and the other (6, 5; 36, 35) of said coupling holes (5, 6; 35, 36), a second through-opening (13, 12; 43, 42) obtained by removal of material.

10. Chain link (1; 30) according to claim 9, **characterised in that** said through-openings (12, 13; 42, 43) are spaced from the centre (14) of the link (1; 30) by a predetermined amount.

11. Bicycle chain (50) consisting of a series of pairs (51) of outer links (1) and a series of pairs (52) of inner links (30) connected together in an articulated manner, **characterised in that** at least one of said links (1; 30) is made according to one of claims 1 to 10.

12. Bicycle chain (50) according to claim 11, **characterised in that** said outer links (1) are made according to one of claims 1 to 10.

13. Bicycle chain (50) according to claim 11, **characterised in that** said outer links (1) and said inner links (30) are made according to one of claims 1 to 10.
